# EUROPÄISCHE PATENTSCHRIFT

(11) **EP 2 771 175 B1**
(45) Veröffentlichungstag und Bekanntmachung des Hinweises auf die Patenterteilung: **08.02.2017**
(21) Anmeldenummer: 12773268.3
(22) Anmeldetag: 26.09.2012
(51) Int. Cl.: B29C 70/48, B29C 70/54, B29C 33/30

(54) **VERFAHREN ZUR HERSTELLUNG EINES FASERVERSTÄRKTEN KUNSTSTOFFTEILS MIT VERBINDUNGSBEREICH**
METHOD FOR PRODUCING A FIBRE-REINFORCED PLASTICS PART WITH A CONNECTING REGION
PROCÉDÉ DE FABRICATION D'UNE PIÈCE EN MATIÈRE PLASTIQUE RENFORCÉE PAR DES FIBRES DOTÉE D'UNE ZONE DE LIAISON

(30) Priorität: 26.10.2011 DE 102011085225
(43) Veröffentlichungstag der Anmeldung: 03.09.2014
(73) Patentinhaber: Bayerische Motoren Werke Aktiengesellschaft, 80809 München (DE)
(72) Erfinder: NIEKERK, Johann, 80993 München (DE); HAMMER, Maik, 84174 Eching (DE)
(86) Internationale Anmeldenummer: PCT/EP2012/068971
(87) Internationale Veröffentlichungsnummer: WO 2013/060546

(56) Entgegenhaltungen:
- DE-A1- 10 101 271
- GB-A- 2 404 894
- US-A- 5 756 034
- US-A1- 2008 028 574
- US-A1- 2011 204 611
- FERRET B ET AL: "Metal inserts in structural composite materials manufactured by RTM", COMPOSITES, IPC BUSINESS PRESS LTD. HAYWARDS HEATH, GB, Bd. 29, Nr. 5-6, 1. Januar 1998 (1998-01-01), Seiten 693-700, XP004120881, ISSN: 0010-4361, DOI: 10.1016/S1359-835X(97)00107-3

## Beschreibung

Die vorliegende Erfindung betrifft ein Verfahren zur Herstellung eines faserverstärkten Kunststoffteils gemäß dem Oberbegriff des Patentanspruches 1.

Ein derartiges Verfahren ist aus der DE 101 01 271 A1 bekannt.

Die BMW AG arbeitet bereits seit geraumer Zeit an Verfahren zur Serienfertigung kohlefaserverstärkter Karosseriekomponenten. Bei der Herstellung von Fahrzeugkarosserieteilen wird häufig eine aus Fasermaterial bestehende Verstärkungsmatrix verwendet, die in einem Spritzwerkzeug, in welches die Verstärkungsmatrix eingelegt wird, mit einem aushärtbaren flüssigen Kunstharz umspritzt und durchtränkt wird. Bei der Verstärkungsmatrix handelt es sich um ein "mattenartiges" Gebilde", z.B. in der Form eines Gewebes, Geleges, Gewirks, Gestricks o.ä.

Eine große Herausforderung im Fahrzeugkarosseriebau stellt der sogenannte "Mischbau" dar, d.h. die Verbindung von aus unterschiedlichen Materialien bestehenden Bauteilen, z.B. von kohlefaserverstärkten Kunststoffbauteilen mit Stahl- oder Aluminiumbauteilen. Eine Möglichkeit derartige unterschiedliche Materialien miteinander zu verbinden, stellt das Kleben dar.

Alternativ dazu können faserverstärkte Kunststoffteile und Metallteile auch durch formschlüssige Verbindungselemente miteinander verbunden werden, was häufig jedoch voraussetzt, dass mindestens eines der beiden miteinander zu verbindenden Bauteile ein Durchgangsloch aufweist. Durchgangslöcher möchte man jedoch u.a. aus Stabilitätsgründen bei faserverstärkten Kunststoffbauteilen möglichst vermeiden.

Aufgabe der Erfindung ist es, ein Verfahren zur Herstellung eines faserverstärkten Kunststoffteils anzugeben, das, ohne das herzustellende Kunststoffteil durchlöchern zu müssen, in einfacher Weise mit anderen Komponenten verbunden werden kann.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zur Herstellung eines faserverstärkten Kunststoffteils, wobei zur Versteifung des herzustellenden Kunststoffteils eine mattenartige, aus Fasermaterial bestehende Verstärkungsmatrix verwendet wird. Bei den in der Verstärkungsmatrix enthaltenen "Fasern" kann es sich z.B. um Kohlefasern, Glasfasern, Metalldrähte o.ä. oder um Kombinationen verschiedener Fasertypen handeln. Das mattenartige Gebilde, d.h. die Verstärkungsmatrix, kann z.B. in der Form eines Gewebes, Geleges, Gewirks, Gestricks o.ä. oder in Kombinationen derartiger Strukturen vorliegen.

In einem ersten Schritt wird die mattenartige Verstärkungsmatrix in ein Werkzeug eingebracht. Bei dem Werkzeug kann es sich um ein Spritzwerkzeug handeln (Resin-Transfer-Moulding-Werkzeug). Ein derartiges Werkzeug besteht z.B. aus einem Werkzeugunterteil und einem relativ dazu verfahrbaren Werkzeugoberteil, die zwischen sich eine der Geometrie des zu herstellenden Kunststoffteils entsprechende Formkavitität bilden. Nach dem Einbringen der Verstärkungsmatrix wird das Spritzwerkzeug geschlossen. Dann wird ein flüssiger, aushärtbarer Kunststoff eingespritzt, der die Formkavität ausfüllt und die Verstärkungsmatrix durchtränkt. Das Werkzeug kann dabei beheizt werden. Bei dem Kunststoff kann es sich insbesondere um ein aushärtbares Kunstharz handeln.

Alternativ zur Verwendung eines Spritzwerkzeugs, mittels dessen flüssiges Kunststoffmaterial in eine Kavität des Werkzeugs eingespritzt wird, kann auch vorgesehen sein, dass eine mit einem aushärtbaren Kunststoffmaterial getränkte, be- oder umschichtete Versteifungsmatrix als Ausgangsmaterial verwendet wird oder dass die Verstärkungsmatrix außerhalb des Werkzeugs, z.B. von Hand, mit einem derartigen Kunststoffmaterial bestrichen oder in anderer Weise Kunststoffmaterial auf die Verstärkungsmatrix appliziert wird und dass die Verstärkungsmatrix anschließend in ein (Nasspress-)Werkzeug eingebracht und zum einem Kunststoffteil umgeformt wird.

Der Kern der Erfindung besteht darin, dass die Verstärkungsmatrix in einem "Verbindungsbereich", d.h. in einem Bereich, in dem das herzustellende Kunststoffteil später mit einer weiteren Komponente verbunden werden soll, muldenartig ausgebeult wird. Das Spritzwerkzeug bzw. das Ober- oder Unterwerkzeug weist hierzu in dem Verbindungsbereich eine entsprechende Aus- oder Einbuchtung auf. In die muldenartige Ausbeulung der Verstärkungsmatrix wird vor dem Einspritzen des Kunststoffmaterials ein "Platzhalterelement" eingebracht. Anschließend wird die Formkavität einschließlich der muldenartigen Ausbeulung mit flüssigem Kunststoff aufgefüllt. Das "Platzhalterelement" hat die Aufgabe, einen vorgegebenen Bereich des herzustellenden Kunststoffteils frei von Kunststoff zu halten.

Nach einer Weiterbildung der Erfindung wird das Platzhalterelement nach dem Aushärten des Kunststoffs von dem entstandenen Kunststoffteil entfernt. Hierdurch ergibt sich an der Stelle, an der sich das Platzhalterelement befunden hat, eine topfartige Vertiefung in dem Kunststoffteil. Anschließend kann in diese topfartige Vertiefung ein Verbindungselement eingebracht werden, über welches das Kunststoffteil mit einer weiteren Komponente, z.B. mit einem (anderen) Fahrzeugkarosseriebauteil, verbunden wird.

Das Platzhalterelement kann nach dem Aushärten des Kunststoffs z.B. einfach aus der Vertiefung herausgezogen werden.

Alternativ dazu kann auch ein Platzhalterelement verwendet werden, an dessen Außenumfang ein Gewinde vorgesehen ist, so dass sich beim Auffüllen der Ausbeulung mit Kunststoff eine topfartige Vertiefung mit einem entsprechenden Gegengewinde ergibt. Das Platzhalterelement kann nach dem Aushärten des Kunststoffs aus dem Gegengewinde herausgeschraubt werden, so dass sich eine topfartige, mit dem Gegengewinde versehene Vertiefung ergibt. Eine topfartige Vertiefung mit Gewinde hat den Vorteil, dass ein mit einem entsprechenden Gewinde versehenes Verbindungselement unmittelbar in die topfartige Vertiefung bzw. in das Gegengewinde der topfartigen Vertiefung eingeschraubt werden kann, wodurch sich eine hohe Verbindungsfestigkeit erreichen lässt. Das Verbindungselement kann zusätzlich in die topfartige Verbindung eingeklebt werden, wodurch sich eine noch höhere Verbindungsfestigkeit erreichen lässt. Ein Einkleben eines Verbindungselements ist selbstverständlich auch in eine topfartige Verbindung möglich, die kein Gewinde aufweist.

Nach einer Weiterbildung der Erfindung wird ein Verbindungselement verwendet, das einen aus der topfartigen Vertiefung herausstehenden Kopf aufweist. Der Kopf kann z.B. die Form eines Mehrkants haben. Alternativ dazu kann der Kopf auch ganz oder teilweise die Form einer Kugel oder ganz oder teilweise eine kugelähnliche Form haben. Ein Kugelkopf oder ein kugelähnlicher Kopf hat den Vorteil, dass auf ihn in einfacher Weise ein Schnappelement aufgeschnappt werden kann, welches Teil einer weiteren, mit dem Kunststoffteil zu verbindenden Komponente ist. Im Unterschied zu kantigen Verbindungselementen haben kugelkopfartige oder kugelkopfähnliche Verbindungselemente den Vorteil, dass ein Verhaken bzw. Verkanten eines damit zusammenwirkenden Schnappelements nahezu ausgeschlossen ist.

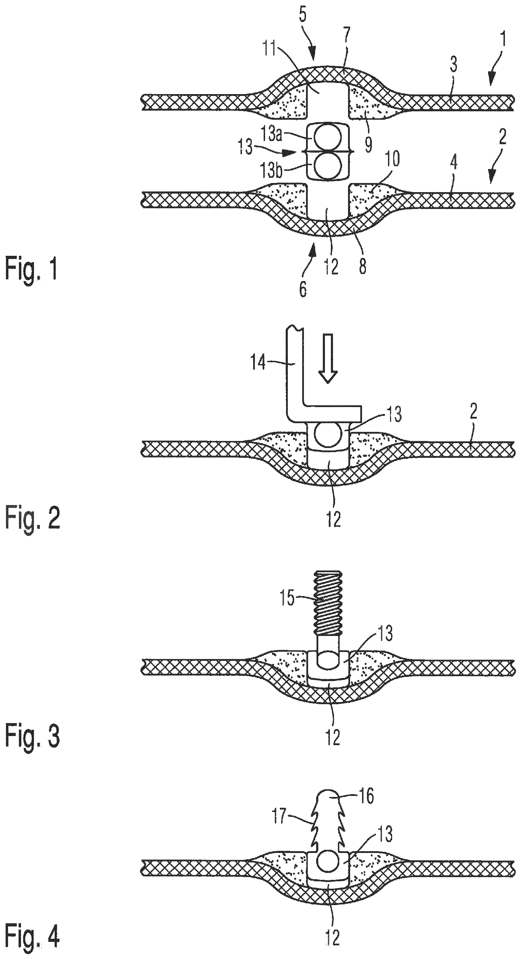

Im Folgenden wird die Erfindung im Zusammenhang mit der Zeichnung näher erläutert. Die Figuren 1 - 4 zeigen verschiedene Ausführungsbeispiele gemäß der Erfindung.

Figur 1 zeigt zwei miteinander zu verbindende faserverstärkte Kunststoffteile 1, 2. Jedes der beiden Kunststoffteile 1, 2 weist in seinem Inneren eine aus Fasermaterial bestehende Verstärkungsmatrix 3, 4 auf, die mit einem hier bereits ausgehärteten Kunststoff durchtränkt und umspritzt ist.

In Verbindungsbereichen 5, 6 der beiden Kunststoffteile 1, 2 weisen diese jeweils eine Ausbeulung 7, 8 auf. Die Verstärkungsmatrix weist im Bereich der Ausbeulung 7 bzw. 8 jedoch kein Loch oder dergleichen auf, so dass die Festigkeit der Kunststoffteile 1, 2 durch die Ausbeulungen 7, 8 im Wesentlichen unbeeinflusst bleibt.

Bei der Herstellung der Kunststoffteile 1, 2 wird die betreffende Versteifungsmatrix 3 bzw. 4 zunächst in ein Spritzwerkzeug (Resin-Transfer-Moulding-Werkzeug) eingebracht, wobei die Verstärkungsmatrix 3, 4 in dem Verbindungsbereich 5, 6 entsprechend der Werkzeugkontur deformiert ist, wodurch sich die Ausbeulungen 7, 8 ergeben.

Anschließend wird im Bereich der Ausbeulung 7 bzw. 8 ein Platzhalterelement (hier nicht dargestellt) angeordnet. Das Platzhalterelement kann z.B. durch ein Schieberelement des Werkzeugs oder durch ein in das Werkzeug von außen eingebrachtes Element platziert werden. Nach dem Platzieren des Platzhalterelements im Bereich der Ausbeulung 7 bzw. 8 wird die Werkzeugkavität mit flüssigem Kunstharz befüllt, wodurch die gesamte Versteifungsmatrix 3 bzw. 4 mit Kunststoffmaterial bzw. Kunstharz durchtränkt wird. Dabei wird auch die betreffende Ausbeulung 7 bzw. 8 mit Kunstharz aufgefüllt, wodurch sich ein sich um das Platzhalterelement herum erstreckendes Kunstharzbett 9 bzw. 10 ergibt.

Nach dem Aushärten des Kunstharzes wird das Platzhalterelement von dem Kunststoffteil 1 bzw. 2 entfernt. Das Entfernen kann, sofern es sich bei dem Platzhalterelement um ein hülsenartiges, hinterschnittfreies Element handelt, durch einfaches Herausziehen erfolgen.

Alternativ dazu kann als Platzhalterelement auch ein zylindrisches, mit einem Gewinde versehenes Element verwendet werden, das nach dem Aushärten des Kunststoffmaterials aus dem Kunstharzbett 9 bzw. 10 herausgeschraubt wird, wodurch sich die in Figur 1 gezeigte topfartige Vertiefung 11 bzw. 12 ergibt. Im Falle eines mit einem Gewinde versehenen Platzhalterelements weist die topfartige Vertiefung 11 bzw. 12 an ihrem Innenumfang ein zu dem Gewinde des Platzhalterelements komplementäres Gegengewinde auf, in das ein hier nicht näher dargestelltes mit einem Komplementärgewinde versehenes Verbindungselement eingeschraubt werden kann.
Bei dem in Figur 1 gezeigten Ausführungsbeispiel wird ein Verbindungselement 13 verwendet, das einen oberen Verbindungsabschnitt 13a und einen unteren Verbindungsabschnitt 13b aufweist. Der obere Verbindungsabschnitt 13a wird in die obere topfartige Vertiefung 11 eingepresst. Der untere Verbindungsabschnitt 13b wird in die topfartige Vertiefung 12 des Kunststoffteils 2 eingepresst. Zusätzlich können die Verbindungsabschnitte 13a, 13b in die Vertiefungen 11 bzw. 12 eingeklebt werden. Auf diese Weise können - wie in Figur 1 dargestellt - beispielsweise zwei faserverstärkte Kunststoffteile miteinander verbunden werden. In ähnlicher Weise können jedoch aus unterschiedlichen Materialien bestehende Komponenten miteinander verbunden werden, z.B. ein faserverstärktes Kunststoffteil mit einem Stahl- oder Aluminiumbauteil.
Figur 2 zeigt ein Ausführungsbeispiel, bei dem in die topfartige Vertiefung 12 des Kunststoffbauteils 2 ein Verbindungselement 13 eingepresst wird, von dem ein Blechbauteil 14 absteht.
Figur 3 zeigt ein Ausführungsbeispiel, bei dem in die topfartige Vertiefung 12 ein Verbindungselement 13 eingepresst wird, von dem nach oben ein Schraubenschaft 15 absteht.

Das Ausführungsbeispiel der Figur 4 zeigt ein in die topfartige Ausnehmung 12 eingepresstes Verbindungselement 13, von dem ein dübelartiger Zapfen 16, welcher mehrere hintereinander angeordnete Rastnasen 17 aufweist, absteht.

## Patentansprüche

1. Verfahren zur Herstellung eines faserverstärkten Kunststoffteils (1, 2) mit folgenden Schritten:
• Bereitstellen einer mattenartigen, aus Fasermaterial bestehenden Verstärkungsmatrix (3, 4),
• Einbringen der Verstärkungsmatrix (3, 4) in ein Werkzeug, insbesondere in ein Spritzwerkzeug,
• Schließen des Werkzeugs,
**dadurch gekennzeichnet, dass**
• die Verstärkungsmatrix in einem Verbindungsbereich (5, 6), in dem das herzustellende Kunststoffteil mit einer weiteren Komponente (14) verbindbar sein soll, derart deformiert wird, dass eine muldenartige Ausbeulung (7, 8) entsteht, wobei in die Ausbeulung (7, 8) ein Platzhalterelement eingebracht und die Ausbeulung um das Platzhalterelement herum mit Kunststoff (9) ausgefüllt wird, und
• das Platzhalterelement nach dem Aushärten des Kunststoffs (9) von dem entstandenen Kunststoffteil (1, 2) entfernt wird, so dass sich an der Stelle, an der sich das Platzhalterelement befunden hat, eine topfartige Vertiefung (11, 12) ergibt.

2. Verfahren nach Anspruch 1,
**dadurch gekennzeichnet, dass** das Platzhalterelement nach dem Aushärten des Kunststoffs (9) aus der Vertiefung (11, 12) herausgezogen wird.

3. Verfahren nach Anspruch 1 oder 2,
**dadurch gekennzeichnet, dass** ein Platzhalterelement verwendet wird, an dessen Außenumfang ein Gewinde vorgesehen ist, so dass sich bei Auffüllen der Ausbeulung (7, 8) eine topfartige Vertiefung (11, 12) mit einem entsprechenden Gegengewinde ergibt, aus dem das Platzhalterelement herausgeschraubt wird.

4. Verfahren nach einem der Ansprüche 1 bis 3,
**dadurch gekennzeichnet, dass** in die topfartige Vertiefung (11, 12) ein Verbindungselement (13) eingebracht wird, über welches das Kunststoffteil (1, 2) mit der weiteren Komponente (14) verbunden werden kann.

5. Verfahren nach einem der Ansprüche 3 oder 4,
**dadurch gekennzeichnet, dass** ein Verbindungselement (13) mit einem Gewinde verwendet wird, welches in das Gegengewinde eingeschraubt wird.

6. Verfahren nach einem der Ansprüche 4 oder 5,
**dadurch gekennzeichnet, dass** ein Verbindungselement verwendet wird, das einen aus der topfartigen Vertiefung (11, 12) herausstehenden Kopf aufweist, der ganz oder teilweise die Form einer Kugel oder ganz oder teilweise eine kugelähnliche Form hat, wobei auf den Kopf ein Schnappelement, welches Teil der weiteren Komponente (14) ist, aufgeschnappt wird.

7. Verfahren nach einem der Ansprüche 4 bis 6,
**dadurch gekennzeichnet, dass** das Verbindungselement (13) in die topfartige Vertiefung (11, 12) eingeklebt wird.

8. Verfahren nach einem der Ansprüche 4 bis 7,
**dadurch gekennzeichnet, dass** das Verbindungselement (13) mit der weiteren Komponente (14) verbunden ist oder verbunden wird.

9. Verfahren nach einem der Ansprüche 4 bis 6,
**dadurch gekennzeichnet, dass** bei geschlossenem Werkzeug ein flüssiger aushärtbarer Kunststoffs in das Spritzwerkzeug eingebracht wird, wobei die Verstärkungsmatrix (3, 4) mit dem Kunststoff durchtränkt wird.

## Claims

1. A method for producing a fibre-reinforced plastics material part (1, 2), having the following steps:
• providing a mat-type reinforcing matrix (3, 4) comprising fibre material,
• introducing the reinforcing matrix (3, 4) into a mould, especially an injection mould,
• closing the mould,
**characterised in that**
• the reinforcing matrix is deformed in a connection region (5, 6) in which the plastics material part to be produced is to be connected to a further component (14), such that a trough-like bulge (7, 8) is produced, wherein a placeholder element is introduced into the bulge (7, 8) and the bulge is filled with plastics material (9) around the placeholder element, and
• after the plastics material (9) has cured, the placeholder element is removed from the resulting plastics material part (1, 2) so that a cup-like depression (11, 12) is produced in the area in which the placeholder element was located.

2. A method according to claim 1,
**characterised in that** after the plastics material (9) has cured, the placeholder element is removed from the depression (11, 12).

3. A method according to claim 1 or claim 2,
**characterised in that** a placeholder element is used, on the outer circumference of which is provided a thread so that when the bulge (7, 8) is filled, a cup-like depression (11, 12) having a corresponding mating thread is produced, out of which the placeholder element is unscrewed.

4. A method according to any one of claims 1 to 3,
**characterised in that** introduced into the cup-like depression (11, 12) is a connection element (13), by which the plastics material part (1, 2) can be connected to the further component (14).

5. A method according to either claim 3 or 4,
**characterised in that** a connection element (13) having a thread is used which is screwed into the mating thread.

6. A method according to either claim 4 or claim 5,
**characterised in that** a connection element is used which has a head which protrudes from the cup-like depression (11, 12) and which partly or completely has the shape of a sphere or partly or completely has a shape similar to a sphere, a snap-on element, which is part of the further component (14), being snapped on to the head.

7. A method according to any one of claims 4 to 6,
**characterised in that** the connection element (13) is adhesively bonded into the cup-like depression (11, 12).

8. A method according to any one of claims 4 to 7,
**characterised in that** the connection element (13) has been connected to or is connected to the further component (14).

9. A method according to any one of claims 4 to 6,
**characterised in that** when the mould is closed, a liquid curable plastics material is introduced into the injection mould, the reinforcing matrix (3, 4) being saturated with the plastics material.

## Revendications

1. Procédé de fabrication d'une pièce en matériau synthétique (1, 2) renforcée par des fibres comprenant les étapes suivantes consistant à :
• se procurer une matrice de renfort (3, 4) en un matériau à base de fibres de type nappe,
• Introduire la matrice de renfort (3, 4) dans un outil, en particulier dans un outil d'injection,
• fermer l'outil,
**caractérisé en ce que**
• dans une zone de liaison (5, 6) dans laquelle la pièce en matériau synthétique à fabriquer doit pouvoir être reliée à un autre composant (14), la matrice de renfort est déformée de façon à obtenir un bossage en forme de cuvette (7, 8), un élément de maintien en place étant introduit dans le bossage (7, 8), et ce bossage étant rempli de matériau synthétique (9) autour de l'élément de maintien en place, et
• après durcissement du matériau synthétique (9), l'élément de maintien en place est enlevé de la pièce en matériau synthétique (1, 2) obtenu de façon à former à l'emplacement où se trouvait l'élément de maintien en place une cavité (11, 12) en forme de pot.

2. Procédé conforme à la revendication 1,
**caractérisé en ce qu'**
après le durcissement du matériau synthétique (9), l'élément de maintien en place est extrait de la cavité (11, 12).

3. Procédé conforme à la revendication 1 ou 2,
**caractérisé en ce que**
l'on utilise un élément de maintien en place sur la périphérie externe duquel est prévu un filetage, de façon à obtenir, lors du remplissage du bossage (7, 8) une cavité en forme de pot (11, 12) ayant un filetage antagoniste correspondant dont est extrait l'élément de maintien en place par dévissage.

4. Procédé conforme à l'une des revendications 1 à 3,
**caractérisé en ce que**
l'on insère dans la cavité en forme de pot (11, 12) un élément de liaison (13) par l'intermédiaire duquel la pièce en matériau synthétique (1, 2) peut être reliée à l'autre composant (14).

5. Procédé conforme à l'une des revendications 3 et 4,
**caractérisé en ce que**
l'on utilise un élément de liaison (13) équipé d'un filetage qui est vissé dans le filetage antagoniste.

6. Procédé conforme à l'une des revendications 4 et 5,
**caractérisé en ce que**
l'on utilise un élément de liaison comportant une tête sortant de la cavité (11, 12) en forme de pot et qui a totalement ou partiellement la forme d'une sphère ou une forme similaire à une sphère, un élément d'encliquetage faisant partie de l'autre composant (14) étant encliqueté sur la tête.

7. Procédé conforme à l'une des revendications 4 à 6,
**caractérisé en ce que**
l'élément de liaison (13) est collé dans la cavité en forme de pot (11, 12).

8. Procédé conforme à l'une des revendications 4 à 7,
**caractérisé en ce que**
l'élément de liaison (13) est relié ou sera relié à l'autre composant (14).

9. Procédé conforme à l'une des revendications 4 à 6,
**caractérisé en ce que**
lorsqu'il est fermé un matériau synthétique durcissable fluide est introduit dans l'outil d'injection, et la matrice de renfort (3, 4) est imprégnée de ce matériau synthétique.
